(19) Europäisches Patentamt
European Patent Office
Office européen des brevets

(11) EP 1 196 498 B1

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **99927965.6**

(22) Anmeldetag: **12.06.1999**

(51) Int Cl.[7]: **C08L 69/00**, C08K 5/5399

(86) Internationale Anmeldenummer:
**PCT/EP1999/004058**

(87) Internationale Veröffentlichungsnummer:
**WO 2000/000030 (06.01.2000 Gazette 2000/01)**

(54) **FLAMMWIDRIGE FORMMASSEN ENTHALTEND POLYCARBONAT UND PFROPFPOLYMERISATE**

FLAME RESISTANT MOLDING MATERIALS CONTAINING POLYCARBONATE AND GRAFT POLYMERS

MASSES A MOULER IGNIFUGES CONTENANT DU POLYCARBONATE ET DES POLYMERES GREFFES

(84) Benannte Vertragsstaaten:
**BE CH DE DK ES FI FR GB IT LI NL**

(30) Priorität: **26.06.1998 DE 19828539**

(43) Veröffentlichungstag der Anmeldung:
**17.04.2002 Patentblatt 2002/16**

(73) Patentinhaber: **Bayer MaterialScience AG**
**51368 Leverkusen (DE)**

(72) Erfinder:
- **ECKEL, Thomas**
  **D-41540 Dormagen (DE)**
- **ZOBEL, Michael**
  **D-40547 Düsseldorf (DE)**
- **WITTMANN, Dieter**
  **D-51375 Leverkusen (DE)**

(56) Entgegenhaltungen:
**EP-A- 0 393 454** **EP-A- 0 728 811**
**DE-A- 19 650 563** **FR-A- 2 374 376**

- **PATENT ABSTRACTS OF JAPAN vol. 1996, no. 03, 29. März 1996 (1996-03-29) & JP 07 292233 A (DENKI KAGAKU KOGYO KK), 7. November 1995 (1995-11-07)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 196 498 B1

Printed by Jouve, 75001 PARIS (FR)

## Beschreibung

Die vorliegende Erfindung betrifft mit Phosphazenen ausgerüstete Formmassen auf Basis Polycarbonat und Pfropfpolymerisaten ausgewählt aus der Gruppe der Silikon-, EP(D)M- und Acrylatkautschuke als Pfropfgrundlage, die einen ausgezeichneten Flammschutz und sehr gute mechanische Eigenschaften wie Spannungsrißbeständigkeit oder Kerbschlagzähigkeit aufweisen.

In DE-A 196 16 968 werden polymerisierbare Phosphazenderivate, Verfahren zu deren Herstellung und deren Verwendung als aushärtbare Bindemittel für Lacke, Beschichtungen. Füllmittel, Spachtelmassen, Klebstoffe, Formteile oder Folien beschrieben.

In WO 97/400 92 werden flammgeschützte Formmassen aus thermoplastischen Polymercn und unsubstituierten Phosphazenen (Typ $PN_{n-x}$ $H_{1-y}$) beschrieben.

EP-A 728 811 beschreibt eine thermoplastische Mischung bestehend aus aromatischem Polycarbonat, Pfropfcopolymer auf Basis von Dienen, Copolymer und Phosphazenen. welche gute Flammschutzeigenschaften, Schlagzähigkeit und Wärmeformbeständigkeit aufweisen.

Aufgabe der vorliegenden Erfindung ist die Bereitstellung von Polycarbonat-Formmassen mit einer ausgezeichneten Flammfestigkeit und ausgezeichneten mechanischen Eigenschaften wie Kerbschlagzähigkeit und Spannungsrißstabilität. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, daß Formmassen auf Basis Polycarbonat und Pfropfpolymerisaten ausgewählt aus der Gruppe der Silikon-, EP(D)M- und Acrylatkautschuke, die Phosphazene enthalten, die gewünschten Eigenschaften aufweisen.

Gegenstand der Erfindung sind daher thermoplastische Formmassen enthaltend

A) Polycarbonat und/oder Polyestercarbonat,

B) mindestens ein kautschukelastisches Pfropfpolymerisat ausgewählt aus der Gruppe bestehend aus Silikon-, EP(D)M- und Acrylatkautschuk als Pfropfgrundlage,

C) mindestens ein thermoplastisches Polymer ausgewählt aus der Gruppe bestehend aus Vinyl(co)polymerisaten und Polyalkylenterephthalaten und

D) mindestens ein Phosphazen ausgewählt aus der Gruppe bestehend aus Phosphazenen der Formeln

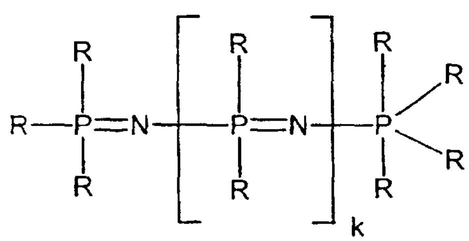

(Ia),

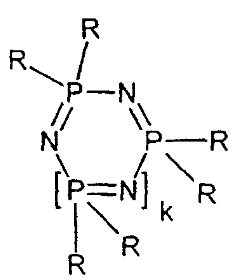

(Ib),

worin

R jeweils gleich oder verschieden ist und für Amino, jeweils gegebenenfalls halogeniertes, vorzugsweise mit Fluor halogeniertes $C_1$- bis $C_8$-Alkyl, oder $C_1$- bis $C_8$- Alkoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$- bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Gegenstand der Erfindung sind vorzugsweise thermoplastische Formmassen enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile mindestens eines kautschukelaktischen Pfropfpolymerisats, ausgewählt aus der Gruppe bestehend aus Silikon-, EP(D)M- und Acrylatkautschuken als Pfropfgrundlage,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 50, vorzugsweise 2 bis 35, insbesondere 5 bis 25 Gew.-Teile mindestens einer Komponente, ausgewählt aus der Gruppe der Phosphazene der Formeln

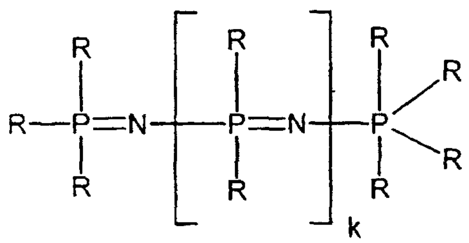

(Ia),

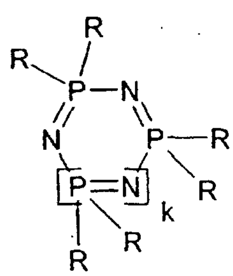

(Ib),

worin

R jeweils gleich oder verschieden ist und für Amino, jeweils gegebenenfalls halogeniertes, vorzugsweise mit Fluor halogeniertes $C_1$- bis $C_8$-Alkyl, oder $C_1$- bis $C_8$- Alkoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$- bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht,

E) 0 bis 5, vorzugsweise 0,1 bis 1, besonders bevorzugt 0,1 bis 0,5 Gew.-Teile fluoriertes Polyolefin.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (III)

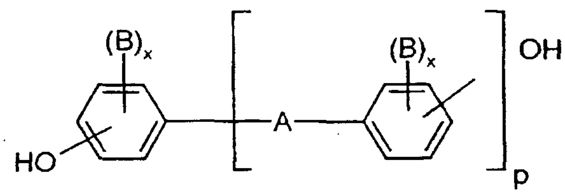

(III),

wobei

| | |
|---|---|
| A | eine Einfachbindung, $C_1$-$C_5$-Alkylen, $C_2$-$C_5$-Alkyliden, $C_5$-$C_6$-Cycloalkyliden, -O-, -SO-, -CO-, -S-, -$SO_2$-, $C_6$-$C_{12}$-Arylen, an das weitere aromatische gegebenenfalls Heteroatome enthaltende Ringe kondensiert sein können, oder ein Rest der Formel (IV) oder (V) |

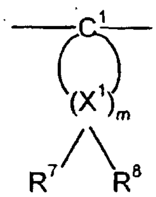

(IV)

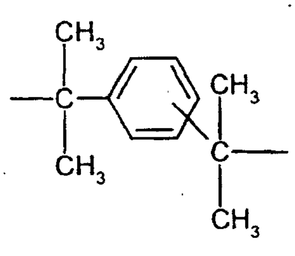

(V)

| | |
|---|---|
| B | jeweils $C_1$-$C_{12}$-Alkyl, vorzugsweise Methyl, Halogen, vorzugsweise Chlor und/oder Brom |
| x | jeweils unabhängig voneinander 0, 1 oder 2, |
| p | 1 oder 0 sind, und |
| $R^7$ und $R^8$ für jedes $X^1$ | individuell wählbar, unabhängig voneinander Wasserstoff oder $C_1$-$C_6$-Alkyl, vorzugsweise Wasserstoff, Methyl oder Ethyl, |
| $X^1$ | Kohlenstoff und |

m eine ganze Zahl von 4 bis 7, bevorzugt 4 oder 5 bedeuten, mit der Maßgabe, daß an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechem beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

## Komponente B

Die Komponente B umfaßt ein oder mehrere kautschukelastische Pfropfpolymerisate ausgewählt aus der Gruppe bestehend aus Silikon-, Acrylat- und EP(D)M-Kautschuken als Pfropfgrundlage.

Die Komponente B umfaßt vorzugsweise ein oder mehrere Pfropfpolymerisate von

B.1 5 bis 95, vorzugsweise 20 bis 80, insbesondere 30 bis 80 Gew.-%, wenigstens eines Vinylmonomeren auf

B.2 95 bis 5, vorzugsweise 80 bis 20, insbesondere 70 bis 20 Gew.-% einer oder mehrerer Pfropfgrundlagen mit Glasübergangstemperaturen < 10°C, vorzugsweise < 0°C, besonders bevorzugt < -20°C ausgewählt aus der Gruppe bestehend aus Silikon-, Acrylat- und EP(D)M-Kautschuken.

Die Pfropfgrundlage B.2 hat im allgemeinen eine mittlere Teilchengröße ($d_{50}$-Wert) von 0,05 bis 5 µm, vorzugsweise 0,10 bis 0,5 µm, besonders bevorzugt 0,20 bis 0,40 µm.

Monomere B.1 sind vorzugsweise Gemische aus

B.1.1 50 bis 99, vorzugsweise 60 bis 80 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

B.1.2 1 bis 50, vorzugsweise 40 bis 20 Gew.-Teilen Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Erfindungsgemäß geeignete Silikonkautschuke B.2 bestehen überwiegend aus Struktureinheiten

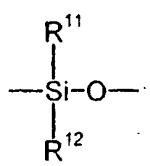

wobei

$R^{11}$ und $R^{12}$ gleich oder verschieden sein können, und $C_1$-$C_6$-Alkyl oder Cycloalkyl oder $C_6$-$C_{12}$-Aryl bedeuten.

Bevorzugte Silikonkautschuke B.2 sind teilchenförmig mit einem mittleren Teilchendurchmesser $d_{50}$ von 0,09

bis 1 µm, vorzugsweise 0,09 bis 0,4 µm und einem Gelgehalt von mehr als 70 Gew.-%, insbesondere 73 bis 98 Gew.-% und sind erhältlich aus

1) Dihalogenorganosilanen
2) 0 bis 10 Mol-%, bezogen auf 1), Trihalogensilanen und
3) 0 bis 3 Mol-%, bezogen auf 1), Tetrahalogensilanen und
4) 0 bis 0.5 Mol-%, bezogen auf 1), Halogentriorganosilanen,

wobei die organischen Reste in den Verbindungen 1), 2), 4)

α) $C_1$-$C_6$-Alkyl oder Cyclohexyl, vorzugsweise Methyl oder Ethyl,

β) $C_6$-$C_{12}$-Aryl, vorzugsweise Phenyl,

γ) $C_1$-$C_6$-Alkenyl, vorzugsweise Vinyl oder Allyl,

δ) Mercapto-$C_1$-$C_6$-alkyl, vorzugsweise Mercaptopropyl

sind, mit der Maßgabe, daß die Summe (γ + δ) 2 bis 10 Mol-%,, bezogen auf alle organischen Reste der Verbindungen 1), 2) und 4) ist, und das Molverhältnis γ:δ = 3:1 bis 1:3, vorzugsweise 2:1 bis 1:2.

Bevorzugte Silikonkautschuke B.2 enthalten als organische Reste mindestens 80 Mol-% Methylgruppen. Endgruppe ist im allgemeinen eine Diorganyl-hydroxylsiloxy-Einheit. vorzugsweise eine Dimethylhydroxysiloxy-Einheit.

Für die Herstellung der Silikonkautschuke B.2 bevorzugte Silane 1) bis 4) enthalten als Halogensubstituenten Chlor.

"Erhältlich" bedeutet, daß der Silikonkautschuk B.2 nicht unbedingt aus den Halogenverbindungen 1) bis 4) hergestellt werden muß. Es sollen auch Silikonkautschuke B.2 gleicher Struktur, die aus Silanen mit anderen hydrolisierbaren Gruppen, wie z.B. $C_1$-$C_6$-Alkoxygruppen, oder aus cyclischen Suloxanoligomeren hergestellt worden sind, umfaßt werden.

Als eine besonders bevorzugte Komponente B.2 werden Silikonpfropfkautschuke genannt. Diese können beispielsweise nach einem dreistufigen Verfahren hergestellt werden.

In der ersten Stufe werden Monomere wie Dimethyldichlorsilan, Vinylmethyldichlorsilan oder Dichlorsilane mit anderen Substituenten zu den durch Destillation einfach zu reinigenden cyclischen Oligomeren (Octamethylcyclotetrasiloxan oder Tetravinyltetramethylcyclotetrasiloxan) umgesetzt (vgl. Chemie in unserer Zeit 4 (1987), 121-127).

In der zweiten Stufe werden aus diesen cyclischen Oligomeren unter Zugabe von Mercaptopropylmethyldimethoxysilan durch ringöffnende kationische Polymerisation die vernetzten Silikonkautschuke erhalten.

In der dritten Stufe werden die erhaltenen Silikonkautschuke, die über pfropfaktive Vinyl- und Mercaptogruppen verfügen, mit Vinylmonomeren (oder Gemischen) radikalisch pfropfpolymerisiert.

Vorzugsweise werden in der zweiten Stufe Mischungen aus cyclischen Siloxanoligomeren wie Octamethylcyclotetrasiloxan und Tetramethyltetravinylcyclotetrasiloxan in Emulsion ringöffnend kationisch polymerisiert. Die Silikonkautschuke fallen teilchenförmig als Emulsion an.

Besonders bevorzugt arbeitet man gemäß GB-PS 1 024 014, mit Alkylbenzolsulfonsäuren, die sowohl katalytisch als auch als Emulgator wirksam sind. Nach der Polymerisation wird die Säure neutralisiert. Anstelle von Alkylbenzolsulfonsäuren können auch n-Alkylsulfonsäuren eingesetzt werden. Es ist auch möglich, neben der Sulfonsäure auch zusätzlich Co-Emulgatoren einzusetzen.

Co-Emulgatoren können nichtionisch oder anionisch sein. Als anionische Co-Emulgatoren kommen insbesondere Salze der n-Alkyl- oder Alkylbenzolsulfonsäuren in Frage. Nichtionische Co-Emulgatoren sind Polyoxyethylenderivate von Fettalkoholen und Fettsäuren. Beispiele sind POE (3)-Laurylalkohol, POE (20)-Oleylalkohol, POE (7) -Nonylalkohol oder POE (10)-Stearat. (Die Schreibweise POE (Zahl).....alkohol bedeutet, daß an ein Molekül ....alkohol soviele Einheiten Ethylenoxid addiert worden sind, wie der Zahl entsprechen. POE steht für Polyethylenoxid. Die Zahl ist ein Mittelwert.)

Die vernetzungs- und pfropfaktiven Gruppen (Vinyl- und Mercaptogruppen, vgl. organische Reste γ und δ) können in den Silikonkautschuk durch Verwendung entsprechender Siloxanoligomerer eingefügt werden. Solche sind z.B. Tetramethyltetravinylcyclotetrasiloxan, oder γ-Mercaptopropylmethyldimethoxysiloxan oder dessen Hydrolysat.

Sie werden dem Hauptoligomer, z.B. Octamethylcyclotetrasiloxan, in der zweiten Stufe in den gewünschten Mengen beigefügt.

Analog kann auch der Eiunbau längerkettiger Alkylreste, wie z.B. Ethyl, Propyl oder dgl. bzw. der Einbau von Phenylgruppen erreicht werden.

Eine ausreichende Vernetzung des Silikonkautschuks kann schon erreicht werden, wenn die Reste γ und δ

bei der Emulsionspolymerisation miteinander reagieren, so daß die Zugabe eines externen Vemetzers entbehrlich sein kann. Jedoch kann ein vemetzendes Silan bei der zweiten Reaktionsstufe zugefügt werden, um den Vernetzungsgrad des Silikonkautschuks zu erhöhen.

Verzweigungen und Vernetzungen können durch Zugabe von z.B. Tetraethoxysilan oder eines Silans der Formel

$$y\text{-}SiX_3,$$

wobei

X eine hydrolisierbare Gruppe, insbesondere ein Alkoxy- oder Halogenrest, und

y ein organischer Rest ist,

erzielt werden.

Bevorzugte Siiane y-$SiX_3$ sind Methyltrimethoxysilan und Phenyltrimethoxysilan.

Der Gelgehalt wird bei 25°C in Aceton bestimmt (vgl. DE-AS 2 521 288, SP. 6, Z. 17 bis 37). Er beträgt bei den erfindungsgemäßen Silikonkautschuken mindestens 70 %, vorzugsweise 73 bis 98 Gew.-%.

Gepfropfte Silikonkautschuke B können durch radikalische Pfropfpolymerisation, beispielsweise analog DE-PS 2 421 288, hergestellt werden.

Zur Herstellung des gepfropften Silikonkautschuks in der dritten Stufe können die Pfropfmonomeren in Anwesenheit des Silikonkautschuks radikalisch pfropfpolymerisiert werden, insbesondere bei 40 bis 90°C. Die Pfropfpolymerisation kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Silikonkautschuk chemisch gebunden. Der Silikonkautschuk besitzt pfropfaktive Reste, so daß besondere Maßnahmen für starke Pfropfung überflüssig sind.

Die gepfropften Silikonkautschuke können durch Pfropfpolymerisation von 5 bis 95 Gew.-Teilen, vorzugsweise 20 bis 80 Gew.-Teilen eines Vinylmonomeren oder eines Vinylmonomerengemisches auf 5 bis 95, vorzugsweise 20 bis 80 Gew.-Teile Silikonkautschuk hergestellt werden.

Ein besonders bevorzugtes Vinylmonomeres ist Styrol oder Methylmethacrylat. Geeignete Vinylmonomermischungen bestehen aus 50 bis 95 Gew.-Teilen Styrol. $\alpha$-Methylstyrol (oder anderen Alkyl- oder Halogen-kemsubstituierten Styrolen) oder Methylmethacrylat einerseits und aus 5 bis 50 Gew.-Teilen Acrylnitril, Methacrylnitril, Acrylsäure-$C_1$-$C_{18}$-alkylester, Methacrylsäure-$C_1$-$C_{16}$-alkylester, Maleinsäureanhydrid oder substituierten Maleinimiden andererseits. Als weitere Vinylmonomere können zusätzlich in kleineren Mengen Acrylsäureester von primären oder sekundären aliphatischen $C_2$-$C_{10}$-Alkoholen, vorzugsweise n-Butylacrylat oder Acryl- oder Methylacrylsäureester des tert.-Butanols, vorzugsweise t-Butylacrylat, anwesend sein. Ein besonders bevorzugtes Monomerengemisch ist 30 bis 40 Gew.-Teile $\alpha$-Methylstyrol, 52 bis 62 Gew.-Teile Methylmethacrylat und 4 bis 14 Gew.-Teile Acrylnitril.

Die so gepfropften Silikonkautschuke können in bekannter Weise aufgearbeitet werden, z.B. durch Koagulation der Latices mit Elektrolyten (Salzen, Säuren oder Gemischen davon) und anschließende Reinigung und Trocknung.

Bei der Herstellung der gepfropften Silikonkautschuke bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren. Hier ist gepfropfter Silikonkautschuk das durch Polymerisation der Pfropfmonomeren in Gegenwart des Silikonkautschuks erhaltene Produkt, genau genommen also im allgemeinen ein Gemisch aus Pfropfcopolymerisat und freiem (Co-)Polymerisat der Pfropfmonomeren bezeichnet.

Pfropfpolymerisate auf Acrylatbasis sind vorzugsweise aus

(a) 20 bis 90 Gew.-%, bezogen auf das Pfropfpolymerisat, Acrylatkautschuk mit einer Glasübergangstemperatur unter -20°C als Pfropfgrundlage und

(b) 10 bis 80 Gew.-%, bezogen auf das Pfropfpolymerisat mindestens eines polymerisierbaren, ethylenisch ungesättigten Monomeren (vgl. B.1) als Pfropfmonomere.

Die Acrylatkautschuke (a) sind vorzugsweise Polymerisate aus Acrylsäurealkylestern, gegebenenfalls mit bis

zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen; wie z.B. Trivinyl- und Triallylcyanurat; polyfunktionelle Vinylverbindungen, wie Di- und Trivinylbenzole; aber auch Triallylphosphat und Diallylphthalat.

Bevorzugte vemetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole.

Die Menge der vemetzten Monomere beträgt vorzugsweise 0,02 bis 5, insbesondere 0,05 bis 2 Gew.-%, bezogen auf die Kautschukgrundlage.

Bei cyclischen vernetzenden Monomereri mit mindestens 3 ethylenisch ungesättigten Gruppen ist es vorteilhaft, die Menge auf unter 1 Gew.-% der Kautschukgrundlage zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können. sind z. B. Acrylnitril, Styrol, $\alpha$-Methylstyrol, Acrylamide, Vinyl-$C_1$-$C_6$-alkylether. Methylmethacrylat, Butadien, Bevorzugte Acrylatkautschuke als Pfropfgrundlage B.2 sind Emulsionspolymerisate, die einen Gelgehalt von mindestens 60 Gew.-% aufweisen.

Die Polymerisate auf Acrylatbasis sind allgemein bekannt, lassen sich nach bekannter Verfahren herstellen (z.B. EP-A 244 857) bzw. sind käufliche Produkte.

Der Gelgehalt der Pfropfgrundlage wird bei 25°C in einem geeigneten Lösungsmittel bestimmt (M. Hoffmann, H. Krömer, R. Kuhn, Polymeranalytik I und II, Georg Thieme-Verlag. Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan. H. Lange, Kolloid, Z. und Z. Polymere 250 (1972), 782-1796) bestimmt werden.

Als EP(D)M-Pfropfgrundlage wird mindestens ein Ethylen und Propylen enthaltendes Copolymerisat oder Terpolymerisat mit einer nur geringen Anzahl von Doppelbindungen eingesetzt (vgl. EP-A 163 411, EP-A 244 857).

Als EP(D)M-Kautschuke werden solche verwendet, die eine. Glastemperatur im Bereich von -60 bis -40°C aufweisen. Die Kautschuke haben nur eine geringe Anzahl von Doppelbindungen, d.h. weniger als 20 Doppelbindungen pro 1000 C-Atome, insbesondere 3 bis 10 Doppelbindungen pro 1000 C-Atome. Beispiele für solche Kautschuke sind aus Ethylen-Propylen bestehende Copolymerisate, sowie Ethylen-Propylen-Terpolymerisate. Letztere werden durch Polymerisation von mindestens 30 Gew.-% Ethylen, mindestens 30 Gew.-% Propylen und 0,5 bis 15 Gew.-% einer nichtkonjugierten diolefinischen Komponente hergestellt. Als Terkomponente werden in der Regel Diolefine mit mindestens 5 Kohlenstoffatomen, wie 5-Ethylidennorbornen. Dicyclopentadien, 2,2,1-Dicyclopentadien und 1,4-Hexadien angewendet. Ferner sind geeignet Polyalkylenamere wie Polypentenamer, Polyoctenamer, Polydodecanamer oder Gemische dieser Stoffe. Femer kommen auch teilhydrierte Polybutadienkautschuke in Betracht, bei denen mindestens 70 % Restdoppelbindungen hydriert sind. Von den vorstehend genannten Kautschuken werden insbesondere die Ethylen-Propylen-Copolymerisate sowie die Ethylen-Propylen-Terpolymerisate (EPDM-Kautschuke) angewendet. In der Regel haben EPDM-Kautschuke eine Mooney-Viskosität $ML_{1-4}$ (100°C) von 25 bis 120. Sie sind im Handel erhältlich.

Die Herstellung des Pfropfpolymerisats auf EP(D)M-Basis kann nach verschiedenen Methoden erfolgen. Vorzugsweise wird eine Lösung des EP(D)M-Elastomeren (Kautschuks) in dem Monomerengemisch und (gegebenenfalls) indifferenten Lösungsmitteln hergestellt und durch Radikalstarter, wie Azoverbindungen oder Peroxide bei höheren Temperaturen die Pfropfreaktion durchgeführt. Beispielhaft seien die Verfahren der DE-AS 23 02 014 und DE-OS 25 33 991 genannt. Es ist auch möglich wie US-PS 4 202 948 beschrieben in Suspension zu arbeiten.

## Komponente C

Die Komponente C umfaßt ein oder mehrere thermoplastische Vinyl (co)polymerisate C.1 und/oder Polyalkylenterephthalate C.2..

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmcthacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

(Co)Polymerisate gemäß Komponente C.1 entstehen häufig bei der Pfropfpolymerisation der Komponente B als Nebenprodukte, besonders dann, wenn große Mengen Monomere B.1 auf kleine Mengen Kautschuk B.2 gepfropft werden. Die gegebenenfalls erfindungsgemäß auch einzusetzende Menge an C.1 bezieht diese Nebenprodukte der Pfropfpolymerisation von B nicht ein.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure. Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyelohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%. Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## Komponente D

Phosphazene gemäß Komponente D, welche gemäß der vorliegenden Erfindung eingesetzt werden. sind lineare Phosphazene gemäß Formel (Ia) oder cyclische Phosphazene gemäß Formel (Ib)

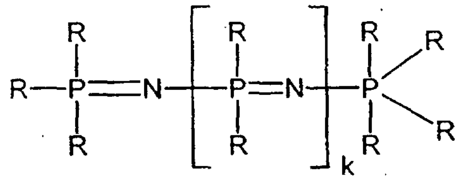

(Ia),

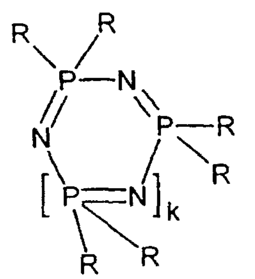

(Ib),

wobei

k und R die oben angegebene Bedeutung haben.

Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein.

Die Phosphazene und deren Herstellung sind beispielsweise in EP-A 728 811, DE-A 1 961668 und WO 97/40092 beschrieben.

**Komponente E**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine F eine Dichte von 1,2 bis 2,3 g/cm$^3$. Bevorzugte fluorierte Polyolefine F sind Polytetrafluorethylen, Polyvinylidenfluorid, Tetrafluorethylen(Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York. Seite 134 und 774; "Modern Plastica Encyclopedia". 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1.2 und 2,3 g/cm$^3$, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate eingesetzt.

Geeignete, in Pulverform einsetzbare fluorierte Polyolefine E sind Tetrafluorethylenpolymerisate mit mittleren

Teilchendurchmesser von 100 bis 1 000 µm und Dichten von 2,0 $g/cm^3$ bis 2,3 $g/cm^3$.

Zur Herstellung einer koagulierten Mischung aus Pfropfpolymerisat und Komponente E wird zuerst eine wäßrige Emulsion (Latex) eines Pfropfpolymerisates B mit einer feinteiligen Emulsion eines Tetraethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

In der Emulsionsmischung liegt das Gleichgewichtsverhältnis Pfropfpolymerisat zum Tetrafluorethylenpolymerisat E bei 95:5 bis 60:40. Anschließend wird die Emulsionsmischung in bekannter Wiese koaguliert, beispielsweise durch Sprühtrocknen.

Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Phosphorverbindungen wie Triphenylphosphat oder m-Phenylen-bis-(diphenylphosphat), organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid. Ammoniummolybdat, Zinkborat, Ammoniumborat, Bariummetaborat, Talk, Silikat, Siliciumoxid und Zinnoxid sowie Siloxanverbindungen genannt.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert,

wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßen thermoplastischen Formmassen eignen sich aufgrund ihrer ausgezeichneten Flammfestigkeit und ihrer guten mechanischen Eigenschaften zur Herstellung von Formkörpern jeglicher Art, insbesondere solchen mit erhöhten Anforderungen an Bruchbeständigkeit und Chemikalienbeständigkeit.

Die Formmassen der vorliegenden Erfindung können zur Herstellung von Formkörpern jeder An verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge (FR), Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Förmkörpern jeglicher Art, vorzugsweise der oben genannten, sowie die Formkörper aus den erfindungsgemäßen Formmassen.

**Beispiele**

**Komponente A**

Lineares Polycarbonat auf Basis Bisphenol A mit einer relativen Lösungsviskosität von 1,26, gemessen in $CH_2Cl_2$ als Lösungsmittel bei 25°C und einer Konzentration von 0,5 g/100 ml.

**Komponente B**

B.1 Silikonpfropfkautschuk

1. Herstellung der Silikonkautschuk-Emulsion

38,4 Gew.-Teile Octamethylcyclotetrasiloxan, 1,2 Gew.-Teile Tetramethyltetravinylcyclotetrasiloxan und 1 Gew.-Teil Mercaptopropylmethyldimethoxysilan werden miteinander verrührt. 0,5 Gew.-Teile Dodecylbenzolsulfonsäure werden zugefügt, anschließend 58,4 Gew.-Teile Wasser innerhalb einer Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu. Die Emulsion wird 2 Stunden bei 85°C und anschließend 36 Stunden bei 20°C gerührt. Neutralisiert wird mit Hilfe von 5n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; der mittlere Teilchendurchmesser $d_{50}$ beträgt 300 nm.

2. Herstellung des gepfropften Silikonkautschuks

In einem Reaktor werden vorgelegt:

2107 Gew.-Teile Latex gemäß 1) und
1073 Gew.-Teile Wasser.

Nach Initiierung mit einer Lösung von 7,5 Gew.-Teilen Kaliumperoxydisulfat in 195 Gew.-Teilen Wasser bei 65°C werden jeweils folgende Lösungen zur Herstellung des Pfropfkautschukes innerhalb von 4 Stunden gleichmäßig eingespeist:

Lösung 1: 540 Gew.-Teile Styrol und
210 Gew.-Teile Acrylnitril;

Lösung 2: 375 Gew.-Teile Wasser und
15 Gew.-Teile Natriumsalz von $C_{14}$-$C_{18}$-Alkylsulfonsäuren.

Anschließend wird jeweils innerhalb von 6 Stunden bei 65°C auspolymerisiert. Es resultiert ein Latex mit einem Feststoffgehalt von ca. 33 Gew.-%.

Nach Koagulation mit einer wäßrigen Magnesiumchlorid/Essigsäurelösung, Filtration und Trocknung im Vakuum werden die Pfropfpolymerisate in Form weißer Pulver erhalten.

B.2 Acrylatpfropfkautschuk

Pfropfpolymerisat von 40 Gew.-Teilen eines Copolymerisates aus Styrol und Acrylnitril im Verhältnis von 72: 28 auf 60 Gew.-Teile teilchenförmigen vernetzten Polyacrylatkautschuk (mittlerer Teilchendurchmesser $d_{50}$ = 0,5 µm) hergestellt durch Emulsionspolymerisation.

B.3 EPDM-Pfropfkautschuk

Pfropfpolymerisat von 50 Gew.-Teilen eines Copolymerisats aus Styrol und Acrylnitril im Verhältnis von 72: 28 auf 50 Gew.-Teile vernetzten EPDM-Kautschuk der Fa. Uniroyal Chemical Company, Handelsname Royaltuf 372 P20.

B.4 Pfropfpolymerisat von 45 Gew.-Teilen eines Copolymerisats aus Styrol und Acrylnitril im Verhältnis von 72:28 auf 55 Gew.-Teile teilchenförmigen vernetzten Polybutadienkautschuk (mittlerer Teilchendurchmesser $d_{50}$ = 0,40 µm), hergestellt durch Emulsionspolymerisation.

**Komponente C**

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

Phenoxyphosphazen der Formel

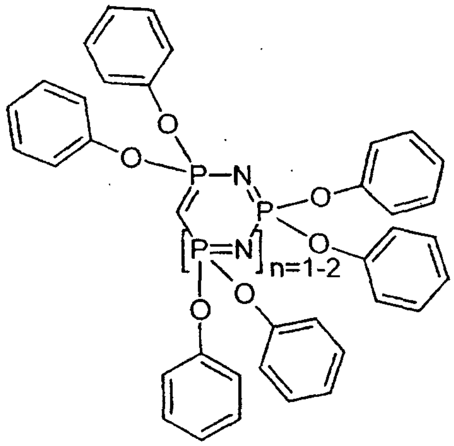

Handelsprodukt P-3800 der Firma Nippon Soda Co., Ltd., Japan.

**Komponente E**

Tetrafluorethylenpolymerisat als koagulierte Mischung aus einer SAN-Pfropfpolymerisat-Emulsion (SAN-Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d50 = 0,28 µm) hergestellt durch Emulsionspolymerisation) in Wasser und einer Tetrafluorethylenpolymerisat-Emulsion in Wasser. Das Gewichtsverhältnis Pfropfpolymerisat zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von $d_{50}$ = 0,28 µm.

**Herstellung von E**

Die Emulsion des Tetrafluorethylenpolymerisats (Teflon 30 N der Fa. DuPont) wird mit der Emulsion des SAN-Pfropfpolymerisats vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Das Spannungsrißverhalten (ESC-Verhalten) wurde an Stäben der Abmessung 80 x 10 x 4 mm, Verarbeitungstemperatur 260°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Vordehnung im Testmedium beurteilt.

Tabelle:

| Formmassen und ihre Eigenschaften | | | | |
|---|---|---|---|---|
| | 1 | 2 | 3 | 4 Vergleich |
| Komponenten (Gew.-Teile) A | 66,7 | 66,7 | 66,7 | 66,7 |
| B.1 | 7,3 | - | - | - |
| B.2 | - | 7,3 | - | - |
| B.3 | - | - | 7,3 | - |
| B.4 | - | - | - | 7,3 |
| C | 9,4 | 9,4 | 9,4 | 9,4 |
| D | 12,0 | 12,0 | 12,0 | 12,0 |
| E | 4,2 | 4,2 | 4,2 | 4,2 |
| Entformungsmittel | 0,4 | 0,4 | 0,4 | 0,4 |
| Eigenschaften ak (ISO 180/1A) ($kJ/m^2$) | 61 | 61 | 64 | 51 |
| Vicat B 120 (ISO 306) (°C) | 107 | 107 | 108 | 103 |
| ESC-Verhalten Bruch bei εx = 2,4 % (min:sec) | 7:30 | 5:50 | 9:10 | 4:20 |
| UL 94V 1,6 mm | V-0 | V-0 | V-0 | V-0 |

Die erfindungsgemäßen Formmassen zeichnen sich durch eine günstige Eigenschaftskombination aus Flammschutz und mechanischen Eigenschaften aus. Überraschenderweise werden durch die gegenüber dem Stand der Technik (Dienkautschuk) geänderten Kautschukgrundlagen Kerbschlagzähigkeit und ESC-Verhalten, das als Maß für die Chemikalienbeständigkeit angesehen werden kann, entscheidend verbessert. In der Spannungsrißbeständigkeit widerstehen die erfindungsgemäßen Formmassen einem Bruch wesentlich länger, was für kritische Anwendungen (Teile mit komplizierten Geometrien) entscheidend sein kann.

**Patentansprüche**

**1.** Thermoplastische Formmassen enthaltend

A) Polycarbonat und/oder Polyestercarbonat,

B) mindestens ein kautschukelastisches Pfropfpolymerisat ausgewählt aus der Gruppe bestehend aus Silikon-, EP(D)M- und Acrylatkautschuk als Pfropfgrundlage,

C) mindestens ein thermoplastisches Polymer ausgewählt aus der Gruppe bestehend aus Vinyl(co)polymerisaten und Polyalkylenterephthalaten und

D) mindestens eines Phosphazens ausgewählt aus der Gruppe bestehend aus Phosphazenen der Formeln

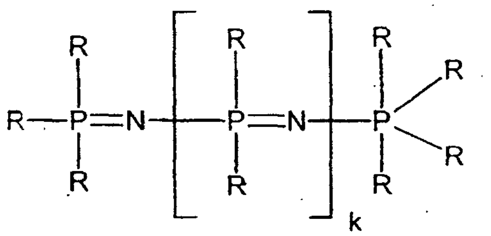

(Ia),

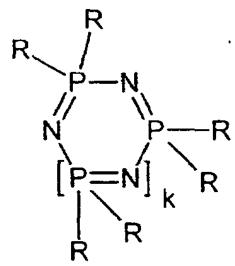

(Ib),

worin

R jeweils gleich oder verschieden ist und für Amino, jeweils gegebenenfalls halogeniertes $C_1$- bis $C_8$-Alkyl oder $C_1$- bis $C_8$- Alkoxy, jeweils gegebenenfalls durch Alkyl und/oder Halogen substituiertes $C_5$-$C_6$-Cycloalkyl, $C_6$-$C_{20}$-Aryl oder $C_7$-$C_{12}$-Aralkyl steht, und

k für 0 oder eine Zahl von 1 bis 15 steht.

**2.** Formmassen gemäß Anspruch 1, enthaltend
40 - 99 Gew.-Teile Komponente A,
0,5 - 60 Gew.-Teile Komponente B,
0 - 45 Gew.-Teile Komponente C,
0,1 - 50 Gew.-Teile Komponente D, und
0,05 - 5 Gew.-Teile fluoriertes Polyolefin.

**3.** Formmassen gemäß Anspruch 1 und 2, wobei Komponente B) ein oder mehrere Pfropfpolymerisate von

B.1 5 bis 95 Gew.-% wenigstens eines Vinylmonomeren auf

B.2 95 bis 5 Gew.-% einer oder mehrerer Pfropfgrundlagen mit Glasübergangstemperaturen <10°C ausgewählt aus der Gruppe bestehend aus Silikon-, Acrylat- und EP(D)M-Kautschuken.

**4.** Formmassen gemäß Anspruch 3, wobei Vinylmonomer B.1 sind:

B.1.1 50 bis 99 Gew.-Teilen Vinylaromaten und/oder kemsubstituierten Vinylaromaten und/oder Methacrylsäure-($C_1$-$C_8$)-Alkylester und

B.1.2 1 bis 50 Gew.-Teilen Vinylcyanide, (Meth)Acrylsäure-($C_1$-$C_8$)-Alkylester und/oder Derivate ungesättigter Carbonsäuren.

**5.** Formmassen gemäß Anspruch 4, wobei Monomere

B.1.1 ausgewählt sind aus mindestens einem der Monomere Styrol, $\alpha$-Methylstyrol und Methylmethacrylat und

B.2 aus mindestens einem der Monomere Acrylnitril, Maleinsäureanhydrid und Methylmethacrylat.

**6.** Formmassen gemäß Anspruch 1, wobei Komponente C.1 Vinyl(co)polymerisate von mindestens einem Monomer aus der Gruppe der Vinylaromaten, Vinylcyaniden, (Meth)Acrylsäure-($C_1$-$C_8$)-alkylester, ungesättigte Carbonsäuren sowie Derivate ungesättigter Carbonsäuren ist.

**7.** Formmassen gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

**8.** Formmassen gemäß der vorhergehenden Ansprüche enthaltend ein Flammschutzmittel, welches verschieden von Komponente D ist.

**9.** Verfahren zur Herstellung von Formmassen gemäß der vorhergehenden Ansprüche, wobei man die Komponenten

A bis E und gegebenenfalls Additive vermischt und schmelzcompoundiert.

**10.** Verwendung der Formmassen gemäß der Ansprüche 1 bis 8 zur Herstellung von Formkörpem.

**11.** Formkörper bzw. Formteile, hergestellt aus Formmassen gemäß der Ansprüche 1 bis 8.

**12.** Gehäuseteile gemäß Anspruch 11.

## Claims

**1.** Thermoplastic moulding compositions comprising

A) polycarbonate and/or polyester-carbonate,

B) at least one rubber-elastic graft polymer chosen from the group consisting of silicone rubbers, EP(D)M rubbers and acrylate rubbers as the graft base,

C) at least one thermoplastic polymer chosen from the group consisting of vinyl (co)polymers and polyalkylene terephthalates and

D) at least one phosphazene chosen from the group consisting of phosphazenes of the formulae

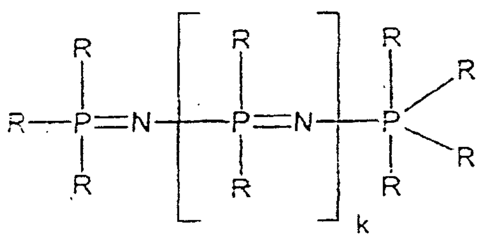

(Ia),

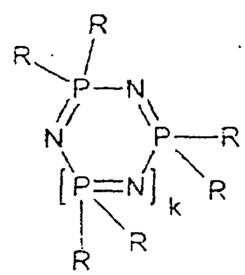

(Ib),

wherein

R is in each case identical or different and represents amino, in each case optionally halogenated $C_1$- to $C_8$-alkyl or $C_1$- to $C_8$-alkoxy, or $C_5$-$C_6$-cycloalkyl, $C_6$-$C_{20}$-aryl or $C_7$-$C_{12}$-aralkyl, in each case optionally substituted by alkyl and/or halogen, and

k represents 0 or a number from 1 to 15

**2.** Moulding compositions according to claim 1, comprising
40 - 99 parts by wt. component A,
0.5 - 60 parts by wt. component B,

0 - 45 parts by wt. component C,
0.1 - 50 parts by wt. component D and
0.05 - 5 parts by wt. fluorinated polyolefin.

**3.** Moulding compositions according to claim 1 and 2, wherein component B) comprises one or more graft polymers of

B.1 5 to 95 wt.% of at least one vinyl monomer on

B.2 95 to 5 wt.% of one or more graft bases having glass transition temperatures of <10°C chosen from the group consisting of silicone rubbers, acrylate rubbers and EP(D)M rubbers.

**4.** Moulding compositions according to claim 3, wherein the vinyl monomers B.1 are:

B.1.1 50 to 99 parts by wt. vinylaromatics and/or vinylaromatics substituted on the nucleus and/or methacrylic acid ($C_1$-$C_8$)-alkyl esters and

B.1.2 1 to 50 parts by wt. vinyl cyanides, (meth)acrylic acid ($C_1$-$C_8$)-alkyl esters and/or derivatives of unsaturated carboxylic acids.

**5.** Moulding compositions according to claim 4, wherein monomers

B.1.1 are chosen from at least one of the monomers styrene, α-methylstyrene and methyl methacrylate and

B.1.2 from at least one of the monomers acrylonitrile, maleic anhydride and methyl methacrylate.

**6.** Moulding compositions according to claim 1, wherein component C.1 is vinyl (co)polymers of at least one monomer from the group consisting of vinylaromatics, vinyl cyanides, (meth)acrylic acid ($C_1$-$C_8$)-alkyl esters, unsaturated carboxylic acids and derivatives of unsaturated carboxylic acids.

**7.** Moulding compositions according to the preceding claims, comprising at least one additive chosen from the group consisting of lubricants and mould release agents, nucleating agents, antistatics, stabilisers, dyestuffs and pigments.

**8.** Moulding compositions according to the preceding claims, comprising a flameproofing agent which differs from component D.

**9.** Process for the preparation of moulding compositions according to the preceding claims, wherein components A to E and optionally additives are mixed and the mixture is subjected to melt compounding.

**10.** Use of the moulding compositions according to claims 1 to 8 for the production of shaped articles.

**11.** Shaped articles or mouldings produced from moulding compositions according to claims 1 to 8.

**12.** Housing components according to claim 11.

## Revendications

**1.** Matières à mouler thermoplastiques contenant

A) un polycarbonate et/ou un polyester-carbonate,
B) au moins un polymère greffé élastique à la manière d'un caoutchouc dont le support de greffage est choisi parmi les caoutchoucs de silicones, les caoutchoucs EP(D)M et les caoutchoucs d'acrylates,
C) au moins un polymère thermoplastique choisi parmi les (co)polymères vinyliques et les téréphtalates de polyalkylène et
D) au moins un phosphazène choisi parmi ceux qui répondent aux formules

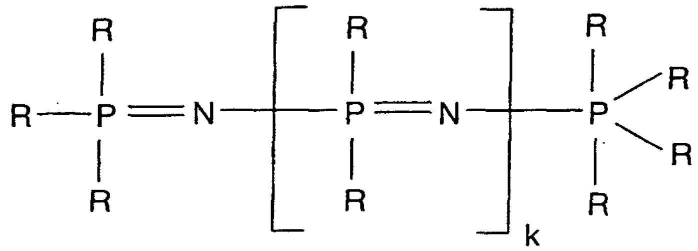

(Ia),

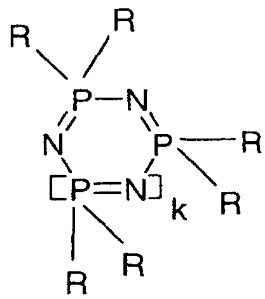

(Ib),

dans lesquelles

les symboles R, ayant des significations identiques ou différentes, représentent chacun un groupe amino, un groupe alkyle en $C_1$-$C_8$ ou alcoxy en $C_1$-$C_8$ éventuellement halogéné, un groupe cycloalkyle en $C_5$-$C_6$, aryle en $C_6$-$C_{20}$ ou aralkyle en $C_7$-$C_{12}$ éventuellement substitué par des groupes alkyles et/ou des halogènes, et

k est égal à 0 ou est un nombre allant de 1 à 15.

**2.** Matières à mouler selon revendication 1, contenant
40 à 99 parties en poids du composant A,
0,5 à 60 parties en poids du composant B,
0 à 45 parties en poids du composant C,
0,1 à 50 parties en poids du composant D, et
0,05 à 5 parties en poids d'une polyoléfine fluorée.

**3.** Matières à mouler selon les revendications 1 et 2 dans lesquelles le composant B) consiste en un ou plusieurs polymères greffés de

B.1 5 à 95 % en poids d'au moins un monomère vinylique sur

B.2 95 à 5 % en poids d'un ou plusieurs supports de greffage ayant des températures de transition du second ordre inférieures à 10°C et choisis parmi les caoutchoucs de silicones, les caoutchoucs d'acrylates et les caoutchoucs EP(D)M.

**4.** Matières à mouler selon revendication 3 dans lesquelles le monomère vinylique B.1 consiste en :

B.1.1 50 à 99 parties en poids de monomères vinylaromatiques et/ou de monomères vinylaromatiques substitués dans les noyaux et/ou de méthacrylates d'alkyle en $C_1$-$C_8$, et

B.1.2 1 à 50 parties en poids de cyanures de vinyle, de (méth)acrylates d'alkyle en $C_1$-$C_8$ et/ou de dérivés d'acides carboxyliques insaturés.

**5.** Matières à mouler selon revendication 4 pour lesquelles
les monomères B.1.1 consistent en au moins un des monomères styrène, α-méthylstyrène et méthacrylate de méthyle, et

les monomères B.2 consistent en au moins un des monomères acrylonitrile, anhydride maléique et méthacrylate de méthyle.

**6.** Matières à mouler selon revendication 1, dans lesquelles le composant C.1 consiste en (co)polymères vinyliques d'au moins un monomère du groupe des dérivés vinylaromatiques, des cyanures de vinyle, des (méth)acrylates d'alkyle en $C_1$-$C_8$, des acides carboxyliques insaturés et des dérivés d'acides carboxyliques insaturés.

**7.** Matières à mouler selon les revendications qui précèdent, contenant au moins un additif choisi dans le groupe des agents lubrifiants et des agents de démoulage, des agents de nucléation, des agents antistatiques, des stabilisants, des colorants et des pigments.

**8.** Matières à mouler selon les revendications qui précèdent, contenant un agent ignifugeant différent du composant D.

**9.** Procédé pour la préparation des matières à mouler selon les revendications qui précèdent, selon lequel on mélange les composants A à E et le cas échéant les additifs et on homogénéise à l'état fondu.

**10.** Utilisation des matières à mouler selon les revendications 1 à 8 pour la fabrication d'objets moulés.

**11.** Objets moulés et pièces moulées fabriqués à partir des matières à mouler selon les revendications 1 à 8.

**12.** Pièces de logements selon revendication 11.